**Europäisches Patentamt**

**European Patent Office**

**Office européen des brevets**

(19)

(11) Veröffentlichungsnummer: **0 264 090 B1**

(12) **EUROPÄISCHE PATENTSCHRIFT**

(45) Veröffentlichungstag der Patentschrift: **11.12.91**

(51) Int. Cl.⁵: **C08F 4/685**, C08F 10/02

(21) Anmeldenummer: **87114835.9**

(22) Anmeldetag: **10.10.87**

(54) **Verfahren zum Herstellen von Homopolymerisaten des Ethens sowie Copolymerisaten des Ethens mit höheren alpha-Monoolefinen mittels eines Ziegler-Katalysatorsystems.**

(30) Priorität: **15.10.86 DE 3635028**

(43) Veröffentlichungstag der Anmeldung:
**20.04.88 Patentblatt 88/16**

(45) Bekanntmachung des Hinweises auf die
Patenterteilung:
**11.12.91 Patentblatt 91/50**

(84) Benannte Vertragsstaaten:
**AT BE DE FR GB IT NL**

(56) Entgegenhaltungen:
**EP-A- 0 137 224**
**EP-A- 0 166 888**
**DE-A- 1 800 696**

(73) Patentinhaber: **BASF Aktiengesellschaft**
**Carl-Bosch-Strasse 38**
**W-6700 Ludwigshafen(DE)**

(72) Erfinder: **Bachl, Robert, Dr.**
**Parsevalstrasse 2**
**W-6520 Worms 1(DE)**
Erfinder: **Funk, Guido, Dr.**
**Duererstrasse 5**
**W-6520 Worms 1(DE)**
Erfinder: **Richter, Konrad, Dr.**
**Kriemhildstrasse 58**
**W-6700 Ludwigshafen(DE)**
Erfinder: **Hemmerich, Rainer, Dr.**
**Veilchenweg 9**
**W-6718 Gruenstadt(DE)**
Erfinder: **Saive, Roland, Dr.**
**Pfarrer-Friedrich-Strasse 44**
**W-6700 Ludwigshafen(DE)**

## Beschreibung

Die vorliegende Erfindung betrifft ein Verfahren zum diskontinuierlichen und - insbesondere - kontinuierlichen Herstellen von Homopolymerisaten des Ethens sowie - insbesondere - Copolymerisaten des Ethens mit untergeordneten Mengen an $C_3$- bis $C_8$-, insbesondere $C_4$- bis $C_6$-$\alpha$-Monoolefinen durch Polymerisation des bzw. der Monomeren bei Temperaturen von 30 bis 200, insbesondere von 50 bis 125 °C und Drücken von 0,1 bis 200, insbesondere von 5 bis 60 bar mittels eines Ziegler-Katalysatorsystems aus

(1) einer Übergangsmetall-Katalysatorkomonente, zu deren Herstellung man

(1.1) zunächst

(1.1.1) einen feinteiligen, porösen, anorganisch-oxidischen Stoff (I), der einen Teilchendurchmesser von 1 bis 1000, vorzugsweise 1 bis 400 $\mu$m, ein Porenvolumen von 0,3 bis 3, vorzugsweise 1 bis 2,5 cm³/g sowie eine Oberfläche von 100 bis 1000, vorzugsweise 200 bis 400 m²/g besitzt und die Formel $SiO_2 \bullet aAl_2O_3$ - worin a steht für eine Zahl im Bereich von 0 bis 2, insbesondere 0 bis 0,5 hat - und

(1.1.2) ein Lösung (II), wie sie sich ergibt beim Zusammenbringen von

(IIa) 100 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise eines Oxakohlenwasserstoffs gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere eines ringgeschlossenen Oxakohlenwasserstoffs gesättigt aliphatischer Natur, der 1 Oxasauerstoffatom sowie 4 bis 6 Kohlenstoffatome aufweist, und vor allem Tetrahydrofuran, und

(IIb) 0,01 bis 50, vorzugsweise 1 bis 30 Gewichtsteilen eines Gemischs aus

(IIb1) 100 Molteilen eines Vanadiumtrihalogenid-Alkohol-Komplexes der Formel $VY_3 \bullet nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesonder einen nicht mehr als 6 Kohlenstoffatome aufweisenden Alkylrest,

(IIb2) 0,2 bis 300, vorzugsweise 0,5 bis 100 Molteilen eines Titantrihalogenids, wobei das Halogen Chlor und/oder Brom sein kann, vorzugsweise eines Titantrichlorids, oder eines Titantrihalogenid-Alkohol-Komplexes der Formel $TiY_3 \bullet nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 4 Kohlenstoffatome aufweisenden Alkylrest, sowie

(IIb3) - gegebenenfalls und vorteilhafterweise - 1 bis 400, vorzugsweise 3 bis 200 Molteilen eines Zirkontetrahalogenids, wobei das Halogen Chlor und/oder Brom sein kann, vorzugsweise eines Zirkontetrachlorids,

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1:0,01 bis 1:2, vorzugsweise von 1:0,2 bis 1:1,5 liegt, die Suspension (III) bei einer Temperatur, die unterhalb von 200, vorzugsweise unterhalb von 160 °C und oberhalb des Schmelzpunkts des verwendeten Oxakohlenwasserstoffs (IIa) liegt, bis zur trockenen Konsistenz - Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise die Zahl 2,

miteinander in Berührung bringt unter Bildung einer Suspension, mit der Maßgabe, daß das Gewichtsverhältnis festphasiges Zwischenprodukt (IV):Aluminiumverbindung (V) im Bereich von 1:0,05 bis 1:2, vorzugsweise 1:0,1 bis 1:1 liegt, - wobei als Suspendiertes ein festphasiges Produkt (VI) resultiert.

(2) einer Organoaluminium-Katalysatorkomponente der Formel $AlR_mX_{3-m}$, worin stehen

X für einen Rest OR, Chlor bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest

2

m für eine Zahl von 1 bis 3, vorzugsweise eine Zahl von 2 bis 3, und

(3) einer Organohalogen-Katalysatorkomponente ( = Cokatalysator),

mit den Maßgaben, daß das Atomverhältnis Übergangsmetall aus der Katalysatorkomponente (1) : Aluminium aus der Katalysatorkomponente (2) im Bereich von 1:0,1 bis 1:500, vorzugsweise 1:0,2 bis 1:50, und das Molverhältnis Organoaluminium-Katalysatorkomponente (2) : Organohalogen-Katalysatorkomponente (3) im Bereich von 1:0,001 bis 1:50, vorzugsweise 1:0,01 bis 1:10 liegt.

Polymerisationsverfahren dieser Art sind bekannt, wobei im gegebenen Zusammenhang als repräsentativ das in der EP-OS 01 66 888 beschriebene gelten kann.

Das dort beschriebene Ziegler-Katalysatorsystem erlaubt zwar bei guter Regelbarkeit der Molmassen mit Wasserstoff Polymerisate mit guter Kornbeschaffenheit und gezielt einstellbarer Molmassenverteilung herzustellen, läßt aber hinsichtlich der Produktivität des Katalysatorsystems und der Restchlorgehalte der Polymerisate noch Wünsche offen.

Aus der GB-PS 1 182 651 und der US-PS 3 674 766 ist andererseits bekannt, daß die Produktivität von Katalysatorsystemen auf Vanadium-Basis durch Umsetzung mit geringen Mengen Sauerstoff gesteigert werden kann. Eine gezielte Einstellung der Molmassenverteilung in Breite und Form ist bei den dort beschriebenen Systemen indes nicht möglich.

In der EP-OS 01 37 224 wird der Einsatz von Sauerstoff zur Produktivitätssteigerung und Beeinflussung der Molmassenverteilung bei einer im wesentlichen Titan und Zirkon enthaltenden Übergangsmetall-Katalysatorkomponente beschrieben. Den dort angeführten Beispielen ist aber zu entnehmen, daß die Regelbarkeit der Molmassen mit Wasserstoff ungenügend und die Kontrolle der Molmassenverteilung unbefriedigend ist, da die breiteren Verteilungen ausschließlich bei unzureichenden Produktivitäten erzielt werden.

Es bestand daher die Aufgabe, eine neue Art Katalysatorsysteme aufzuzeigen, die gegenüber den bekannten Systemen erlaubt, bei zugleich hoher Produktivität und Regelbarkeit der Molmassen mit Wasserstoff Polymerisate mit guter Kornbeschaffenheit und in Breite und Form optimal steuerbarer Molmassenverteilung zu erzeugen.

Es wurde gefunden, daß die gestellte Aufgabe gelöst werden kann mit einem Katalysatorsystem der eingangs definierten Art, wenn dessen Übergangsmetall-Katalysatorkomponente (1) eine solche ist, bei deren Herstellung man das aus Stufe (1.2) erhaltene festphasige Produkt (VI) zusätzlich noch mit Sauerstoff umsetzt, - und derart mit dem dabei resultierenden festphasigen Endprodukt (VII) die Katalysatorkomponente (1) gewinnt.

Gegenstand der vorliegenden Erfindung ist dementsprechend ein Verfahren zum diskontinuierlichen und - insbesondere - kontinuierlichen Herstellen von Homopolymerisaten des Ethens sowie - insbesondere - Copolymerisaten des Ethens mit untergeordneten Mengen an $C_3$- bis $C_8$-, insbesondere $C_4$- bis $C_6$-$\alpha$-Monoolefinen, durch Polymerisation des bzw. der Monomeren bei Temperaturen von 30 bis 200, insbesondere von 50 bis 125 °C und Drücken von 0,1 bis 200, insbesondere 5 bis 60 bar mittels eines Ziegler-Katalysatorsystems aus

(1) einer Übergangsmetall-Katalysatorkomonente, zu deren Herstellung man

(1.1) zunächst

(1.1.1) einen feinteiligen, porösen, anorganisch-oxidischen Stoff (I), der einen Teilchendurchmesser von 1 bis 1000, vorzugsweise 1 bis 400 μm, ein Porenvolumen von 0,3 bis 3, vorzugsweise 1 bis 2,5 cm³/g sowie eine Oberfläche von 100 bis 1000, vorzugsweise 200 bis 400 m²/g besitzt und die Formel $SiO_2 \bullet aAl_2O_3$ - worin a steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise eines Oxakohlenwasserstoffs gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere eines ringgeschlossenen Oxakohlenwasserstoffs gesättigt aliphatischer Natur, der 1 Oxasauerstoffatom sowie 4 bis 6 Kohlenstoffatome aufweist, und vor allem Tetrahydrofuran, und

(IIb) 0,01 bis 50, vorzugsweise 1 bis 30 Gewichtsteilen eines Gemischs aus

(IIb1) 100 Molteilen eines Vanadiumtrihalogenid-Alkohol-Komplexes der Formel $VY_3 \bullet nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest,

(IIb2) 0,2 bis 300, vorzugsweise 0,5 bis 100 Molteilen eines Titantrihalogenids, wobei das Halogen Chlor und/oder Brom sein kann, vorzugsweise eines Titantrichlorids, oder eines Titantrihalogenid-Alkohol-Komplexes der Formel $TiY_3 \bullet nZ\text{-OH}$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 4 Kohlenstoffatome aufweisenden Alkylrest, sowie

(IIb3) - gegebenenfalls und vorteilhafterweise - 1 bis 400, vorzugsweise 3 bis 200 Molteilen eines Zirkontetrahalogenids, wobei das Halogen Chlor und/oder Brom sein kann, vorzugsweise eines Zirkontetrachlorids,

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1:0,01 bis 1:2, vorzugsweise von 1:0,2 bis 1:1,5 liegt, die Suspension (III) bei einer Temperatur, die unterhalb von 200, vorzugsweise unterhalb von 160° C und oberhalb des Schmelzpunkts des verwendeten Oxakohlenwasserstoffs (IIa) liegt, bis zur trockenen Konsistenz - Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise die Zahl 2,

miteinander in Berührung bringt unter Bildung einer Suspension, mit der Maßgabe, daß das Gewichtsverhältnis festphasiges Zwischenprodukt (IV):Aluminiumverbindung (V) im Bereich von 1:0,05 bis 1:2, vorzugsweise 1:0,1 bis 1:1 liegt, - wobei als Suspendiertes ein festphasiges Produkt (VI) resultiert,

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest und vorzugsweise einen $C_2$- bis $C_8$-Alkylrest, und

m für eine Zahl von 1 bis 3, vorzugsweise eine Zahl von 2 bis 3,

und

(3) einer Organohalogen-Katalysatorkomponente ( = Cokatalysator),

mit den Maßgaben, daß das Atomverhältnis Übergangsmetall aus der Katalysatorkomponente (1):Aluminium aus der Katalysatorkomponente (2) im Bereich von 1:0,1 bis 1:500, vorzugsweise 1:0,2 bis 1:50 und das Molverhältnis Organoaluminium-Katalysatorkomponente (2):Organohalogen-Katalysatorkomponente (3) im Bereich von 1:0,001 bis 1:50, vorzugsweise 1:0,01 bis 1:10 liegt.

Das erfindungsgemäße Verfahren ist dadurch gekennzeichnet, daß eingesetzt wird als Übergangsmetall-Katalysatorkomponente (1) eine solche, bei deren Herstellung man

(1.3) zusätzlich noch

(1.3.1) das aus Stufe (1.2) erhaltene - gegebenenfalls und vorteilhafterweise in einem inerten Kohlenwasserstoff suspendiert vorliegende - festphasige Produkt (VI) und

(1.3.2) Sauerstoff

bei einer Temperatur im Bereich von -25 bis 100, insbesondere 0 bis 50° C über eine Zeitspanne von 5 bis 500, insbesondere 30 bis 300 Minuten miteinander in Berührung bringt, mit der Maßgabe, daß das Atomverhältnis Übergangsmetall aus dem Produkt (VI) zu Sauerstoff 1:0,01 bis 1:10, insbesondere 1:0,05 bis 1:1 beträgt, - und derart mit dem dabei resultierenden festphasigen Endprodukt (VII) die Übergangsmetall-Katalysatorkomponente (1) gewinnt.

Zu dem erfindungsgemäßen Verfahren ist erläuternd das Folgende zu bemerken:

Das Polymerisationsverfahren als solches kann - unter Beachtung der kennzeichnenden Besonderheiten - in praktisch allen einschlägig üblichen technologischen Ausgestaltungen durchgeführt werden, etwa als Suspensions-Polymerisationsverfahren oder Trockenphasen-Polymerisationsverfahren.Die erwähnten technologischen Ausgestaltungen - mit anderen Worten: die technologischen Varianten der Polymerisation von Olefinen nach Ziegler - sind aus der Literatur und Praxis wohlbekannt, so daß sich nähere Ausführungen zu ihnen erübrigen. Zu bemerken ist allenfalls noch, daß beim erfindungsgemäßen Verfahren die Komponenten des Katalysatorsystems in mannigfacher Weise in den Polymerisationsraum eingebracht werden können, z.B. (1) die Übergangsmetallkomponente (1), die Organoaluminiumkomponente (2) sowie die Organohalo-

4

genkomponente (3) alle örtlich gemeinsam, (ii) die gleichen drei Komponenten alle örtlich getrennt voneinander, (iii) die Übergangsmetallkomponente (1) einerseits und ein Gemisch aus (2) und (3) andererseits örtlich getrennt voneinander - was von besonderem Vorteil sein kann - oder (iiii) ein Gemisch aus der Übergangsmetallkomponente (1) und der Organohalogenkomponente (3) einerseits und die Organoaluminiumkomponente (2) andererseits örtlich getrennt voneinander.

Das neue Verfahren - das vorzugsweise kontinuierlich durchgeführt wird - eignet sich zum Herstellen von Homopolymerisaten des Ethens, vornehmlich aber von Copolymerisaten des Ethens mit untergeordneten Mengen an $C_3$- bis $C_8$-, insbesondere $C_4$- bis $C_6$-$\alpha$-Monoolefinen; - wobei letztere in Form von Einzelindividuen oder in Form von Gemischen aus zwei oder mehr Einzelindividuen vorliegen können. Zur Copolymerisation geeignete $\alpha$-Monoolefine sind z.B. Propen, n-Buten-1, n-Penten-1, n-Hexen-1, 4-Methylpenten, n-Hepten-1 und n-Octen-1, wobei wiederum mit n-Buten-1, n-Hexen-1 sowie 4-Methylpenten-1 (oder Gemischen aus diesen $\alpha$-Monoolefinen) die am besten zu bewertenden Polymerisate erhältlich sind, insbesondere solche, die auf 100 Moleinheiten Ethen 0,1 bis 10 Moleinheiten des höheren $\alpha$-Monoolefins bzw. der höheren $\alpha$-Monoolefine einpolymerisiert enthalten.

Was die Molekulargewichte der Polymerisate betrifft, so kann deren Regelung in einschlägig üblicher Weise erfolgen, insbesondere mittels Wasserstoff als Regulans.

Zu der beim erfindungsgemäßen Verfahren einzusetzenden Übergangsmetall-Katalysatorkomponente (1) ist im einzelnen das Folgende zu sagen:

Ihre Herstellung erfolgt in drei Stufen, die oben sowie nachstehend mit (1.1), (1.2) und (1.3) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Suspension (III) bildet, die bis zur trockenen Konsistenz - Bildung eines festphasigen Zwischenprodukts (IV) - eingedampft wird. In Stufe (1.2) wird letzteres mit einer Lösung einer bestimmten, oben definierten Aluminiumverbindung (V) in Berührung gebracht unter neuerlicher Bildung einer Suspension, - wobei als Suspendiertes ein festphasiges Produkt (VI) resultiert. In Stufe (1.3) wird letzteres dann in suspendierter oder isolierter Form mit Sauerstoff umgesetzt, - wobei das dabei resultierende festphasige Endprodukt (VII) die neue Übergangsmetall-Katalysatorkomponente (1) ist.

Im einzelnen kann man dabei wie folgt verfahren:

Stufe (1.1)

Der anorganisch-oxidische Stofe (I) wird in Substanz oder in einem Oxakohlenwasserstoff suspendiert (zweckmäßigerweise einem Oxakohlenwasserstoff wie er unter (IIa) definiert ist und mit einem Feststoffgehalt der Suspension von nicht weniger als 5 Gewichtsprozent) mit der Lösung (II) vereinigt und danach die gebildete Suspension (III) eingedampft.

Das Herstellen der Lösung (II) selbst kann so erfolgen, wie man üblicherweise Lösungen herstellt und ist insoweit nicht mit Besonderheiten verbunden.

Als abschließende Maßnahme bei Stufe (1.1) wird die Suspension (III) bis zur trockenen Konsistenz eingedampft, wobei das festphasige Zwischenprodukt (IV) erhalten wird. Hierbei kann man - unter Einhaltung der oben gegebenen Temperaturbedingungen - so verfahren, wie man üblicherweise Suspensionen schonend eindampft. Diese bedeutet, daß es im allgemeinen zweckmäßig - und bei relativ hohen Oxakohlenwasserstoffen (IIa) u.U. unerläßlich - ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen; - wofür sich z.B. Rotationsverdampfer bewährt haben. Eine verbleibende Restmenge an Oxakohlenwasserstoff, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 0,1- bis 50-, vorzugsweise etwa 25 gew.%ige Suspension des festphasigen Zwischenprodukts (IV) sowie eine 5- bis 80-, vorzugsweise etwa 20 gew.%ige Lösung der Aluminiumverbindung (V), wobei als Suspensions- bzw. Lösungsmittel insbesondere Kohlenwasserstoffe, vor allem relativ leichtsiedende Alkan-Kohlenwasserstoffe, wie Hexane, Heptane oder Benzine, in Betracht kommen. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die - ebenfalls mögliche - umgekehrte. Bei Temperaturen von -25 bis 120 °C, insbesondere bei Temperaturen von 25 bis 80° C, ist innerhalb einer Zeitspanne von 15 bis 600 Minuten, insbesondere 60 bis 300 Minuten, die Bildung des - als Suspendiertes vorliegenden - festphasigen Produktes (VI) erfolgt.

Stufe (1.3)

Das festphasige Produkt VI) wird in Ab- oder - vorzugsweise - Anwesenheit eines Suspensionsmittels, wiederum der vorgenannten Art - etwa Hexane, Heptane, Benzine-, wobei man auch direkt die in Stufe (1.2) erhaltene Suspension verwenden kann, und Menge mit Sauerstoff in den gewünschten Mengenrelationen zur Reaktion gebracht. Die Umsetzung erfolgt zweckmäßigerweise in 0,1- bis 50, vorzugsweise etwa 25 gew.%iger Suspension unter Rühren bei Temperaturen, die - innerhalb der oben gegebenen Rahmenbedingungen - bis zum Siedepunkt des jeweiligen Suspensionsmittels reichen können; die Umsetzung kann insbesondere bei Raumtemperatur erfolgen. Der Sauerstoff kann in reiner Form oder im Gemisch mit einem Inertgas, wie Stickstoff, Helium oder Argon, eingesetzt werden. Die Einleitungsgeschwindigkeit und/oder die Verdünnung mit einem Inertgas sollten dabei so reguliert werden, daß die Wärmetönung bequem abgeführt werden kann. Man erhält so das festphasige Endprodukt (VII).

Dieses kann zweckmäßigerweise unmittelbar in Form der erhaltenen Suspension - gegebenenfalls nach einer Wäsche mittels Digerieren oder Filtrieren - als Übergangsmetall-Katalysatorkomponente (1) verwendet werden. Falls gewünscht, ist es aber auch möglich, das festphasige Produkt (VII) zu isolieren und dann erst als Katalysatorkomponente (1) einzusetzen; - wobei sich zum Isolieren z.B. der folgende Weg anbietet: Man trennt das Produkt (VII) von der flüssigen Phase mittels Filtration und wäscht es mit reiner Flüssigkeit (etwa der Art, die man auch als Suspensions- bzw. Lösungsmittel verwendet hatte), worauf man es trocknet, etwa im Vakuum.

Was die stoffliche Seite der Übergangsmetall-Katalysatorkomponente (1) betrifft, ist im einzelnen noch das Folgende zu sagen:
Der in Stufe (1.1) einzusetzende anorganisch-oxidische Stoff (1) wird im allgemeinen ein Aluminosilikat oder - insbesondere - ein Siliciumdioxid sein; wichtig ist, daß er die geforderten Eigenschaften besitzt. - Wie sich gezeigt hat, sind die der gegebenen Spezifikation entsprechenden im Handel erhältlichen einschlägig üblichen Trägerstoffe gut geeignet.

Das zu verwendende Lösungsmittel (IIa) ist ein Oxakohlenwasserstoff gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise ein Oxakohlenwasserstoff gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere ein ringgeschlossener Oxakohlenwasserstoff gesättigt aliphatischer Natur, der 1 Oxasauerstoffatom sowie 4 bis 6 Kohlenstoffatome aufweist, und vor allem Tetrahydrofuran. Außer dem letztgenannten eignen sich - unter Beachtung der oben wiedergegebenen Rangfolge - als Oxakohlenwasserstoffe weiterhin z.B. Ethylenglykoldimethylether, Anisol, Tetrahydropyran und Dioxan. Die Oxakohlenwasserstoffe können eingesetzt werden in Form von Einzelindividuen sowie Gemischen aus zwei oder mehr Einzelindividuen.

Der einzusetzende Vanadiumtrihalogenid-Alkohol-Komplex (IIb1) hat die Formel $VY_3 \bullet nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest. Dabei kann das zugrunde liegende Vanadiumtrihalogenid ein bei Ziegler-Katalysatorsystemen übliches sein. Als alkoholische Komponente eignen sich - unter Wahrung der oben wiedergegebenen Rangfolge - z.B. Methanol, Ethanol, Propanol-2, Butanol-2 und 2-Methylbutanol-2. Die Komplexe können - z.B. zweckmäßigerweise in situ, etwa aus Vanadiumtrichlorid und Propanol-2 in Tetrahydrofuran als Lösungsmittel - nach üblichen Methoden hergestellt sein, z.B. nach D.C. Bradley, M.L. Mehta, Can. J. Chem. 40 (1962), 1710/3; auch sie können eingesetzt werden in Form von Einzelindividuen sowie Gemischen aus zwei oder mehr Einzelindividuen.

Das einzusetzende Titantrihalogenid (IIb2) kann wiederum ein bei Ziegler-Katalysatorsystemen übliches sein, z.B. ein bei der Reduktion eines Titantetrahalogenids mittels Wasserstoff, Aluminium oder aluminiumorganischen Verbindungen erhaltenes Reaktionsprodukt. Als besonders gut geeignet haben sich erwiesen z.B. Trichloride der Formel $TiCl_3$, wie sie bei der Reduktion von Titantetrachlorid mittels Wasserstoff anfallen sowie Trichloride der Formel $TiCl_3 \bullet 1/3$ $AlCl_3$, wie sie bei der Reduktion von Titantetrachlorid mittels metallischem Aluminium anfallen. Wahlweise kann ein Titantrihalogenid-Alkohol-Komplex der eingangs definierten Art eingesetzt werden; - für ihn gilt im übrigen sinngemäß das gleiche wie für den Vanadiumtrihalogenid-Alkohol-Komplex (IIb1). Die Titantrihalogenide und Titantrichlorid-Alkohol-Komplexe können eingesetzt werden in Form von Einzelindividuen sowie Gemischen aus zwei oder mehr Einzelindividuen.

Das gegebenenfalls mit einzusetzende Zirkontetrahologenid (IIb3) kann ebenfalls ein bei Ziegler-Katalysatorsystemen übliches sein.

Die in Stufe (1.2) einzusetzende Aluminiumverbindung (V) kann z.B. eine Verbindung sein wie sie repräsentiert wird durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ oder $Al(C_2H_5)_{1,5}(OC_2H_5)_{1,5}$ sowie Isoprenylaluminium. Wie sich gezeigt hat, sind besonders gut geeignet Aluminiumverbindungen der Formeln $C_2H_5AlCl_2$, $(C_2H_5)_2AlCl$ sowie Isoprenylaluminium. Die Aluminiumverbindungen (V) können eingesetzt werden in Form von Einzelindividuen sowie Gemischen aus zwei oder mehr Einzelindividuen.

Der in Stufe (1.3) einzusetzende Sauerstoff kann als solcher oder im Gemisch mit einem Inertgas, wie Stickstoff, Helium oder Argon, d.h. verdünnt, etwa in Form von Luft, angewandt werden. Geeignet ist auch Ozon. Wichtig ist, daß das eingesetzte Gas sorgfältig von Feuchtigkeit befreit worden ist.

Die Organoaluminium-Katalysatorkomponente (2) betreffend ist zu sagen, daß sich hierfür die einschlägig üblichen Verbindungen eignen; als geeignete Individuen sind z.B. zu nennen solche der Formeln $Al(C_2H_5)_3$, $Al(i-C_4H_9)_3$, $Al(n-C_4H_9)_3$, $Al(C_8H_{17})_3$ sowie Isoprenylaluminium.

Als Organohalogen-Katalysatorkomponente (3) schließlich kann zweckmäßigerweise eine Verbindung aus den folgenden Verbindungsklassen eingesetzt werden:

(A) Gesättigte aliphatische Halogenkohlenwasserstoffe; wobei geeignete Individuen sind solche der Formeln $CCl_4$, $CHCl_3$, $CH_2Cl_2$, $CFCl_3$, $CF_2Cl_2$ und $CF_3Cl$. Davon besonders geeignet sind $CCl_4$, $CHCl_3$, $CH_2Cl_2$ und $CF_2Cl_2$. Herausragend gut geeignet ist $CFCl_3$.

(B) Olefinisch ungesättigte aliphatische Halogenkohlenwasserstoffe; wobei geeignete Individuen sind solche der Formeln $CH_2=CHCl$, $CH_2=CCl_2$, $CHCl=CCl_2$, $Cl_2C=CCl_2$, $CH_2=CH-CH_2Cl$ und $CCl_2=CCl-CCl_3$. Davon besonders geeignet sind $CH_2=CHCl$ und $CH_2=CCl_2$. Herausragend gut geeignet sind $CH_2=CH-CH_2Cl$ und $CCl_2=CCl-CCl_3$.

(C) Acetylenisch ungesättigte aliphatische Halogenkohlenwasserstoffe; wobei geeignete Individuen sind solche der Formeln $CH\equiv C-CH_2Cl$ und $C_2H_5-C\equiv C-CH_2Cl$. Davon besonders gut geeignet ist $CH\equiv C-CH_2Cl$.

(D) Aromatische Halogenkohlenwasserstoffe; wobei geeignete Individuen sind $\alpha$-Chlortoluol, $\alpha,\alpha$-Dichlortoluol, $\alpha,\alpha,\alpha$-Trichlortoluol, Diphenylchlormethan, Diphenyldichlormethan und Triphenylchlormethan. Davon besonders gut geeignet sind $\alpha$-Chlortoluol, $\alpha,\alpha$-Dichlortoluol und $\alpha,\alpha,\alpha$-Trichlortoluol.

(E) Olefinisch ungesättigte aliphatische halogenierte Carbonsäureester, wobei geeignete Individuen sind 2,3,4,4-Tetrachlorbuten-2-säuremethylester, 2,3,4,4-Tetrachlorbuten-2-säureethylester, 2,3,4,4-Tetrachlorbuten-2-säure-n-butylester, Methylperchlorcrotonat und Ethylperchlorcrotonat. Davon sind hervorzuheben Methylperchlorcrotonat und 2,3,4,4-Tetrachlorbuten-2-säure-n-butylester.

Wie sich gezeigt hat, sind von den genannten Verbindungsklassen für den erfindungsgemäßen Zweck am besten geeignet Verbindungen der Klassen (A), (B) und (C), gefolgt von (D) und schließlich (E). Die betroffenen Verbindungen können eingesetzt werden in Form von Einzelindividuen sowie Gemischen aus zwei oder mehr Einzelindividuen.

Beispiel

Herstellung der Übergangsmetall-Katalysatorkomponente (1):

Es wurde ausgegangen von (1.1.1) 25,0 Gew.-Teilen Siliciumdioxid ($SiO_2$, Teilchendurchmesser 90 bis 150 $\mu$m, Porenvolumen: 1,7 $cm^3/g$, Oberfläche: 320 $m^2/g$ sowie (1.1.2) einer Lösung aus 100 Gewichtsteilen Tetrahydrofuran und 12,5 Gew.-Teilen einer Übergangsmetall-Komposition, bestehend aus 100 Molteilen eines Vanadiumtrihalogenid-Alkohol-Komplexes der Formel $VCl_3 \bullet 4ZOH$, worin Z steht für einen iso-Propylrest, 4,0 Molteilen eines Titantrihalogenids der Formel $TiCl_3 \bullet 1/3AlCl_3$ sowie 4,0 Molteilen Zirkontetrachlorid. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 70° C gebracht wurde.

Stufe (1.2)

20 Gew.-Teile des in Stufe (1.1) gewonnenen festphasigen Zwischenprodukts (IV) wurden in 103 Gew.-Teilen n-Heptan suspendiert, worauf diese Suspension mit einer Lösung aus 8 Gew.-Teilen Diethylaluminiumchlorid in 17 Gew.-Teilen n-Heptan versetzt und die daraus resultierende Suspension kurz bei 65° C gerührt wurde. Anschließend wurde filtriert, drei mal mit n-Heptan gewaschen und im Vakuum getrocknet. Die Analyse des erhaltenen festphasigen Produktes (VI) ergab einen Gehalt an Vanadium von 7,0 und an Chlor von 17,0 Gew.-%.

Stufe (1.3)

0,21 Gew.-Teile des in Stufe (1.2) gewonnenen festphasigen Zwischenproduktes (VI) wurden in 20 Gew.-Teilen n-Heptan suspendiert, worauf diese Suspension in ein evakuiertes Gefäß gebracht, mit 10 ml trockener Luft versetzt und bei Raumtemperatur 60 min geschüttelt wurde; hierbei betrug das Atomverhältnis Übergangsmetall aus dem Produkt (VI) zu Sauerstoff etwa 1:0,1. Das resultierende festphasige Endprodukt (VII), d.h. die Katalysatorkomponente (1) wurde ohne Isolierung in der vorliegenden Suspension bei der Polymerisation eingesetzt.

Polymerisation

Ein 10-1-Autoklav wurde mit 5 l Isobutan, 0,1 l Buten-1, des wie oben beschrieben hergestellten Suspension der Katalysatorkomponente (1) sowie 5 mMol Triisobutylaluminium als Katalysatorkomponente (2) und 5 mMol Trichlorfluormethan als Organohalogen-Katalysatorkomponente (3) beschickt (entsprechend einem Atomverhältnis Übergangsmetalle aus der Katalysatorkomponente (1):Aluminium aus der Katalysatorkomponente (2) von 1:16 sowie einem Molverhältnis Organoaluminium-Katalysatorkomponente (2) zu Organohalogen-Katalysatorkomponente (3) von 1:1). Sodann wurde unter Rühren und bei den - jeweils durch Regelung konstant gehaltenen - Parametern: Ethenpartialdruck 16,5 bar, Wasserstoffpartialdruck 1,0 bar, Temperatur 80°C, über eine Zeitspanne von 90 min polymerisiert; danach wurde die Polymerisation durch Entspannen abgebrochen.
Nähere Angaben zu dem erhalten Copolymerisat finden sich in der unten stehenden Tabelle.

Vergleichsbeispiel

Es wurde vorgegangen wie im vorstehenden Beispiel, mit der einzigen Ausnahme, daß bei der Polymerisation statt der Übergangsmetallkomponente (1) gleiche Gewichtsteile des im Zuge der Herstellung dieser Komponente in Stufe (1.2) erhaltenen festphasigen Produktes (VI) eingesetzt wurden.
Nähere Angaben zum dabei erhaltenen Copolymerisat finden sich wiederum in der unten stehenden Tabelle.

Tabelle

| | Ausbeute [g] [g/g Kat.] | | Cl i. Pol. [ppm] | HLMI¹ [g/10'] | [η]² [dl/g] | M̄w³ | M̄n³ | M̄w/M̄n = Q | SD [g/l] | Siebanalyse⁴ [Gew.%] [mm] | | | |
|---|---|---|---|---|---|---|---|---|---|---|---|---|---|
| | | | | | | | | | | <0,125 | <0,25 | <0,5 | >2,0 |
| Beispiel | 3280 | 15 620 | 11 | 3,34 | 4,45 | 559.580 | 25 360 | 22,1 | 405 | 0,1 | 0,4 | 3,1 | 0,3 |
| Vergleichs-beispiel | 1540 | 7 320 | 23 | 11,15 | 3,46 | 380 330 | 18 800 | 20,2 | 416 | 0,6 | 0,9 | 7,4 | 0,6 |

1 Bestimmt gemäß DIN 53 735, 190°C, 21,6 Kp Belastung

2 Bestimmt gemäß DIN 53 728

3 Bestimmt mittels Gelpermeationschromatographie

4 Bestimmt gemäß DIN 53 477

Wie aus der Tabelle hervorgeht, wird gemäß der Erfindung die Produktivität auf ca. das Doppelte erhöht sowie der im Polymerisat verbleibende Restchlorgehalt auf ca. die Hälfte erniedrigt. Dabei wird die Regelbarkeit mit H₂ zwar geringfügig verschlechtert; angesichts der Ethen- und H₂-Partialdrücke ist sie jedoch immer noch herausragend gut. Die erfindungsgemäße Produktivitätssteigerung wird schließlich ohne Nachteile in Breite und Form der Molmassenverteilung und der Kornbeschaffenheit der Polymerisate erreicht.

**Patentansprüche**

1. Verfahren zum Herstellen von Homopolymerisaten des Ethens sowie Copolymerisaten des Ethens mit untergeordneten Mengen an $C_3$- bis $C_8$-$\alpha$-Monoolefinen durch Polymerisation des bzw. der Monomeren bei Temperaturen von 30 bis 200 und Drücken von 0,1 bis 200 bar mittels eines Ziegler-Katalysatorsystems aus

(1) einer Übergangsmetall-Katalysatorkomponente, zu deren Herstellung man

(1.1) zunächst

(1.1.1) einen feinteiligen, porösen, anorganisch-oxidischen Stoff (I), der einen Teilchendurchmesser von 1 bis 1000$\mu$m, ein Porenvolumen von 0,3 bis 3 $cm^3/g$ sowie eine Oberfläche von 100 bis 1000 $m^2/g$ besitzt und die Formel $SiO_2 \bullet aAl_2O_3$ - worin a steht für eine Zahl im Bereich von 0 bis 2 - hat, und

(1.1.2) eine Lösung (II), wie sie sich ergibt beim Zusammenbringen von

(IIa) 100 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, und

(IIb) 0,01 bis 50 Gewichtsteilen eines Gemischs aus

(IIb1) 100 Molteilen eines Vanadiumtrihalogenid-Alkohol-Komplexes der Formel $VY_3 \bullet nZ\text{-}OH$, worin stehen Y für Chlor oder Brom, n für eine Zahl von 1 bis 6 und Z für einen einwertigen, nicht mehr als 10 Kohlenstoffatome aufweisenden Kohlenwasserstoffrest gesättigt-aliphatischer oder teils gesättigt-aliphatischer, teils aromatischer Natur,

(IIb2) 0,2 bis 300 Molteilen eines Titantrihalogenids, wobei das Halogen Chlor und/oder Brom sein kann oder eines Titantrihalogenid-Komplexes der Formel $TiY_3 \bullet nZ\text{-}OH$, worin stehen Y für Chlor oder Brom, n für eine Zahl von 1 bis 6 und Z für einen einwertigen, nicht mehr als 10 Kohlenstoffatome aufweisenden Kohlenwasserstoffrest gesättigt-aliphatischer oder teils gesättigt-aliphatischer, teils aromatischer Natur, sowie

(IIb3) - gegebenenfalls - 1 bis 400 Molteilen eines Zirkontetrahalogenids, wobei das Halogen Chlor und/oder Brom sein kann,

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1:0,01 bis 1:2 liegt, die Suspension (III) bei einer Temperatur, die unterhalb von 200°C und oberhalb des Schmelzpunkts des verwendeten Oxakohlenwasserstoffs (IIa) liegt, bis zur trockenen Konsistenz- Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

    X    für einen Rest OR, Chlor, Brom bzw. Wasserstoff,

    R    für einen $C_1$- bis $C_{18}$-Kohlenwasserstoffrest und

    m    für eine Zahl von 1 bis 3,

miteinander in Berührung bringt unter Bildung einer Suspension, mit der Maßgabe, daß das Gewichtsverhältnis festphasiges Zwischenprodukt (IV):Aluminiumverbindung (V) im Bereich von 1:0,05 bis 1:2 liegt, - wobei als Suspendiertes ein festphasiges Produkt (VI) resultiert,

(2) einer Organoaluminium-Katalysatorkomponente der Formel $AlR_mX_{3-m}$, worin stehen

    X    für einen Rest OR, Chlor bzw. Wasserstoff,

    R    für einen $C_1$- bis $C_{18}$-Kohlenwasserstoffrest, und

    m    für eine Zahl von 1 bis 3,

und

(3) einer Organohalogen-Katalysatorkomponente

mit den Maßgaben, daß das Atomverhältnis Übergangsmetall aus der Katalysatorkomponente (1) : Aluminium aus der Katalysatorkomponente (2) im Bereich von 1:0,1 bis 1:500 und das Molverhältnis Organoaluminium-Katalysatorkomponente (2) : Organohalogen-Katalysatorkomponente (3) im Bereich von 1:0,001 bis 1:50 liegt,

dadurch gekennzeichnet, daß eingesetzt wird

als Übergangsmetall-Katalysatorkomponente (1) eine solche, bei deren Herstellung man

(1.3) zusätzlich noch
(1.3.1) das aus Stufe (1.2) erhaltene - gegebenenfalls in einem inerten Kohlenwasserstoff suspendiert vorliegende - festphasige Produkt (VI) und
(1.3.2) Sauerstoff
bei einer Temperatur im Bereich von -25 bis 100° C über eine Zeitspanne von 5 bis 500 Minuten miteinander in Berührung bringt, mit der Maßgabe, daß das Atomverhältnis Übergangsmetall aus dem Produkt (VI) zu Sauerstoff 1:0,01 bis 1:10 beträgt, - und derart mit dem dabei resultierenden festphasigen Endprodukt (VII) die Übergangsmetall-Katalysatorkomponente (1) gewinnt.

**Claims**

1. A process for the preparation of homopolymers of ethene and copolymers of ethene with minor amounts of $C_3$-$C_8$-$\alpha$- monoolefins by polymerization of the monomer or monomers at from 30 to 200° C and under from 0.1 to 200 bar using a Ziegler catalyst system consisting of

(1) a transition metal catalyst component which is prepared by a method in which
(1.1) first
(1.1.1.) a finely divided, porous inorganic oxide substance (I) which has a particle diameter of from 1 to 1,000 $\mu$m, a pore volume of from 0.3 to 3 $cm^3$/g and a surface area of from 100 to 1,000 $m^2$/g and is of the formula $SiO_2.aAl_2O_3$, where a is from 0 to 2, and
(1.1.2.) a solution (II), as obtained by combining
(IIa) 100 parts by weight of a saturated aliphatic or partially saturated aliphatic and partially aromatic oxahydrocarbon which has 1 or 2 oxa oxygen atoms and more than 3 but less than 19 carbon atoms, and
(IIb) from 0.01 to 50 parts by weight of a mixture of
(IIb1) 100 molar parts of a vanadium trihalide/alcohol complex of the formula $VY_3.nZ\text{-}OH$, where Y is chlorine or bromine, n is from 1 to 6 and Z is monovalent saturated aliphatic or partially saturated aliphatic and partially aromatic hydrocarbon radical of not more than 10 carbon atoms,
(IIb2) from 0.2 to 300 molar parts of a titanium trihalide, where halogen may be chlorine and/or bromine, or of a titanium trihalide complex of the formula $TiY_3.nZ\text{-}OH$, where Y is chlorine or bromine, n is from 1 to 6 and Z is a monovalent saturated aliphatic or partially saturated aliphatic and partially aromatic hydrocarbon radical of not more than 10 carbon atoms, and
(IIb3) if desired, from 1 to 400 molar parts of a zirconium tetrahalide, where halogen may be chlorine and/or bromine,
are brought into contact with one another with formation of a suspension (III), with the proviso that the weight ratio of inorganic oxide substance (I) to transition metal composition (IIb) is from 1:0.01 to 1:2, and the suspension (III) is evaporated to dryness at below 200° C and above the melting point of the oxahydrocarbon (IIa) used, with formation of a solid-phase intermediate (IV), and
(1.2) then
(1.2.1) the solid-phase intermediate (IV) obtained from stage (1.1) and
(1.2.2) an aluminum compound (V) which is dissolved in an organic solvent and is of the formula $AlR_mX_{3-m}$, where
X      is a radical OR, chlorine, bromine or hydrogen,
R      is a $C_1$-$C_{18}$-hydrocarbon radical and
m      is from 1 to 3,
are brought into contact with one another with formation of a suspension, with the proviso that the weight ratio of solid-phase intermediate (IV) to aluminum compound (V) is from 1:0.05 to 1:2, the resulting suspended substance being a solid-phase product (VI),
(2) an organoaluminum catalyst component of the formula $AlR_mX_{3-m}$, where
X      is a radical OR, chlorine or hydrogen,
R      is a $C_1$-$C_{18}$-hydrocarbon radical and
m      is from 1 to 3, and
(3) an organohalogen catalyst component

with the provisos that the atomic ratio of transition metal from the catalyst component (1) to aluminum

EP 0 264 090 B1

from the catalyst component (2) is from 1:0.1 to 1:500 and the molar ration of organoaluminum catalyst component (2) to organohalogen catalyst component (3) is from 1:0.001 to 1:50,

wherein the transition metal catalyst component (1) used is one prepared by a method in which

(1.3) in addition
(1.3.1) the solid-phase product (VI) obtained from stage (1.2), which may be in suspension in an inert hydrocarbon, and
(1.3.2) oxygen
are brought into contact with one another at from -25 to 100°C, for from 5 to 500 minutes, with the proviso that the atomic ratio of transition metal from the product (VI) to oxygen is from 1:0.01 to 1:10, the resulting solid-phase end product (VII) being the transition metal catalyst component (1).

**Revendications**

1.  Procédé de préparation d'homopolymères de l'éthylène et de copolymères de l'éthylène avec des quantités mineures d'$\alpha$-monooléfines en $C_3$ à $C_8$, par polymérisation du ou des monomères à des températures de 30 à 200°C et sous des pressions de 0,1 à 200 bar, au moyen d'un système catalytique de Ziegler composé de
    (1) un composant de catalyseur à base d'un métal de transition, pour la préparation duquel
    (1.1) on commence par mettre en contact mutuel, avec formation d'une suspension (III),
    (1.1.1) une substance de la nature d'un oxyde inorganique (I), poreuse et finement divisée, qui a un diamètre de particules de 1 à 1000 $\mu$m, un volume de pores de 0,3 à 3 $cm^3$/g et une surface de 100 à 1000 $m^3$/g et qui répond à la formule $SiO_2.aAl_2O_3$ - dans laquelle a est mis pour un nombre dans la gamme de 0 à 2 - et
    (1.1.2) une solution (II) obtenue en mélangeant
    (IIa) 100 parties en poids d'un oxa-hydrocarbure de nature aliphatique saturée ou en partie aliphatique saturée et en partie aromatique, qui comporte 1 à 2 atomes d'oxygène oxa et plus de 3, mais moins de 19 atomes de carbone, et
    (IIb) de 0,01 à 50 parties en poids d'un mélange de
    (11b1) 100 parties en moles d'un complexe trihalogénure de vanadium-alcool de formule $VY_3.nZ$-OH, dans laquelle Y est mis pour un atome de chlore ou de brome, n pour un nombre de 1 à 6 et Z pour un reste hydrocarboné monovalent de nature aliphatique saturée ou en partie aliphatique saturée et en partie aromatique, ne comportant pas plus de 10 atomes de carbone,
    (IIb2) 0,2 à 300 parties en moles d'un trihalogénure de titane, l'halogène pouvant être le chlore et/ou le brome, ou d'un complexe de trihalogénure de titane de formule $TiY_3.nZ$-OH, dans laquelle Y est mis pour un atome de chlore ou de brome, n pour un nombre de 1 à 6 et Z pour un reste hydrocarboné monovalent de nature aliphatique saturée ou en partie aliphatique saturée et en partie aromatique, ne comportant pas plus de 10 atomes de carbone, et
    (IIb3) - éventuellement - 1 à 400 parties en moles d'un tétrahalogénure de zirconium, l'halogène pouvant être le chlore ou le brome,
    étant spécifié que le rapport pondéral de la substance de la nature d'un oxyde inorganique (I) à la composition à base de métaux de transition (IIb) se situe dans la gamme de 1:0,01 à 1:2,
    on évapore la suspension (III) à une température qui se situe au-dessous de 200°C et au-dessus du point de fusion de l'oxa-hydrocarbure (IIa) utilisé, jusqu'à la consistance sèche - pour la formation d'un produit intermédiaire en phase solide (IV),
    (1.2) puis on met en contact mutuel, avec formation d'une suspension,
    (1.2.1) le produit intermédiaire en phase solide (IV) obtenu dans l'étape (1.1) et
    (1.2.2) un composé d'aluminium (V) dissous dans un solvant organique, dans la formule $AlR_mX_{3-m}$ duquel
    X est mis pour un reste OR, un atome de chlore, de brome ou d'hydrogène,
    R pour un reste hydrocarboné en $C_1$ à $C_{18}$ et
    m pour un nombre de 1 à 3,
    étant spécifié que le rapport pondéral du produit intermédiaire en phase solide (IV) au composé d'aluminium (V) se situe dans la gamme de 1:0,05 à 1:2 - d'où il résulte, en tant que matière en suspension, un produit en phase solide (VI),
    (2) un composant de catalyseur organo-aluminique de formule $AlR_mX_{3-m}$, dans laquelle
    X est mis pour un reste OR, un atome de chlore ou d'hydrogène

12

R est mis pour un reste hydrocarboné en $C_1$ à $C_{18}$ et

m est mis pour un nombre de 1 à 3

et

(3) un composant de catalyseur organohalogéné

étant spécifié que le rapport atomique du métal de transition du composant de catalyseur (1) à l'aluminium du composant de catalyseur (2) se situe dans la gamme de 1:0,1 à 1:500 et que le rapport molaire du composant de catalyseur organoaluminique (2) au composant de catalyseur organohalogéné (3) se situe dans la gamme de 1:0,001 à 1:50,

caractérisé en ce qu'on utilise,

en tant que composant de catalyseur à base de métal de transition (1), un composant de catalyseur pour la préparation duquel

(1.3) on met en plus en contact mutuel

(1.3.1) le produit en phase solide (VI) obtenu dans l'étape (1.2) - se présentant éventuellement à l'état de suspension dans un hydrocarbure inerte - et

(1.3.2) de l'oxygène

à une température dans la gamme de -25 à 100° C pendant une période de 5 à 500 mn,

étant spécifie que le rapport atomique du métal de transition du produit (VI) à l'oxygène est compris entre 1:0,01 et 1:10,

et on obtient de la sorte, avec le produit final en phase solide (VII) résultant de ce traitement, le composant de catalyseur à base de métal de transition (1).